# EUROPÄISCHE PATENTSCHRIFT

(11) **EP 2 493 738 B1**
(45) Veröffentlichungstag und Bekanntmachung des Hinweises auf die Patenterteilung: **05.03.2014**
(21) Anmeldenummer: 10778600.6
(22) Anmeldetag: 27.10.2010
(51) Int. Cl.: B60T 17/22

(54) **SCHEIBENBREMSVORRICHTUNG FÜR SCHIENENFAHRZEUGE**
DISK BRAKE DEVICE FOR RAIL VEHICLES
SYSTÈME DE FREIN À DISQUE POUR VÉHICULES FERROVIAIRES

(30) Priorität: 30.10.2009 DE 102009051352
(43) Veröffentlichungstag der Anmeldung: 05.09.2012
(73) Patentinhaber: Siemens Aktiengesellschaft, 80333 München (DE)
(72) Erfinder: ENGELS, Gerhard, 52146 Würselen (DE)
(86) Internationale Anmeldenummer: PCT/EP2010/066270
(87) Internationale Veröffentlichungsnummer: WO 2011/051347

(56) Entgegenhaltungen:
- EP-A1- 1 640 233
- DE-A1- 1 951 104
- DE-A1-102008 015 873
- DE-C1- 4 425 598

## Beschreibung

Die Erfindung bezieht sich auf eine Scheibenbremsvorrichtung für Schienenfahrzeuge, mit einer Bremsscheibe zum Anbau an ein Fahrwerk und einer Bremsanordnung zum Bereitstellen von Bremskraft, die einen Bremszylinder und eine Bremszange aufweist, welche einen Bremsbelag zum Zusammenwirken mit der Bremsscheibe trägt, wobei auf einem Kraftübertragungsweg von dem Bremszylinder zum Bremsbelag ein Sensor vorgesehen ist, der zum Erfassen einer Kraftübertragung auf die Bremsscheibe ausgebildet und angeordnet ist.

Beispiele für eine solche Scheibenbremsvorrichtung ergeben sich aus der DE 4 425 598 C, der DE 195 11 04 A, bei der der Sensor durch einen Schalter gebildet ist, der durch eine Kraftübertragung auf die Bremsscheibe betätigt wird, und der DE 10 2008 015 873 A, nach deren technischer Lehre eine Mehrzahl Belastungssensoren vorgesehen ist, die auch teilweise in dem Kraftübertragungsweg liegen.

Eine Funktionstüchtigkeit einer solchen Scheibenbremsvorrichtung für Schienenfahrzeuge ist für deren sicheren Betrieb von grundsätzlicher Bedeutung, aus diesem Grunde werden Maßnahmen getroffen, unabhängig von einer Auslösung eines Bremsvorgangs, eine tatsächliche Bereitstellung von Bremskraft zu prüfen.

Dies geschieht in der Weise, dass der an dem Bremszylinder anstehende Bremsdruck erfasst und ausgewertet wird. Bei dieser Vorgehensweise wird nicht in Betracht gezogen, dass möglicher Weise eine von dem Bremszylinder ausgeübte Bremskraft aus irgendeinem Grund nicht auf die Bremsscheibe übertragen wird, denn der Kraftweg von dem Bremszylinder zur Bremsscheibe wird von vornherein als nicht fehlerbehaftet angesehen.

Dies ist insofern als nachteilig anzusehen, dass nicht mit Sicherheit davon ausgegangen werden kann, eine von dem Bremszylinder bereitgestellte Bremskraft würde unter allen Umständen auf die Bremsscheibe übertragen.

Ausgehend hiervon liegt der Erfindung die Aufgabe zugrunde, eine Scheibenbremsvorrichtung der eingangs genannten Art derart weiter zu entwickeln, dass eine tatsächliche Übertragung von Bremskraft auf die Bremsscheibe mit höherer Sicherheit feststellbar ist.

Diese Aufgabe wird bei der eingangs genannten Scheibenbremsvorrichtung dadurch gelöst, dass der Bremsbelag über ein Gelenk an der Bremszange angebracht ist und der Sensor im Bereich des Gelenks angeordnet ist.

Eine solche Vorgehensweise gestattet es, eine tatsächliche Kraftübertragung auf die Bremsscheibe mit höherer Sicherheit festzustellen. Aufgrund der Anlage des Bremsbelags an der Bremsscheibe ergeben sich Rückwirkungen auf den Kraftübertragungsweg zwischen dem Bremszylinder und dem Bremsbelag, die mit Hilfe des vorgesehenen Sensors erfassbar sind.

Der Bremsbelag ist über ein Gelenk an der Bremszange angebracht und der Sensor im Bereich des Gelenks angeordnet. Es ist ersichtlich, dass eine Anlage des Bremsbelages an der Bremsscheibe dazu führt, dass sich die Kräfte im Gelenk ändern. Dieser Vorgang wird zum Feststellen, ob tatsächlich eine Bremskraft auf die Bremsscheibe ausgeübt wird, ausgenutzt.

Das Gelenk kann bevorzugt als Bolzen-/Buchsen-Kombination ausgebildet sein, wobei der Sensor in die Buchse integriert sein kann. Eine Anlage des Bremsbelags an der Bremsscheibe bewirkt beispielsweise, dass der Bolzen mit höherer Kraft gegen die Innenseite der Buchse gedrückt wird. Diese Kraft kann mit Hilfe des Sensors, der bevorzugt als Piezo-Element vorliegt, erfasst werden.

Vorteilhafter Weise ist der Sensor zur Ausgabe eines elektrischen Signals ausgebildet, welches ein Erreichen einer vorgegebenen Mindestkraftübertragung zwischen dem Bremsbelag und der Bremsscheibe wiedergibt. Ein solches elektrisches Signal kann beispielsweise einem am Schienenfahrzeug vorgesehenen Bremssteuergerät (BSG) zugeleitet werden, Indikator für die anstehende Bremskraft zwischen Bremszange und Bremsscheibe dient.

Ergänzend zu dem Sensor zum Feststellen einer anstehenden Bremskraft zwischen Bremsbelag und Bremsscheibe kann ein induktiver Näherungsschalter zum Erfassen einer Annäherung eines Bremsbelaghalters an die Bremsscheibe vorgesehen sein. Hierdurch ergibt sich eine zusätzliche Absicherung im Hinblick auf eine Bremskraftübertragung.

Der Näherungsschalter kann bevorzugt in einen Randbereich des Bremsbelaghalters integriert sein, beispielsweise in Einbaulage der Scheibenbremsvorrichtung im oberen Bereich des Bremsbelaghalters. Durch den Einbau des Näherungsschalters an dieser Stelle ist ein Einsatz spezieller Bremsbeläge nicht erforderlich.

Der Näherungsschalter kann zur Signalisierung eines Bremsbelagverlustes und/oder des Erreichens einer Verschleißgrenze für den Bremsbelag ausgelegt sein. Dabei kann der Näherungsschalter bei einem definierten Abstand zur Bremsscheibe einen Schaltungsvorgang ausführen. Daraufhin kann einem Schienenfahrzeugführer die gewonnene Information über den Wirkweg angezeigt werden. Zu Anzeigezwecken ist es auch möglich, dass ein Leuchtmelder zum Einsatz kommt.

Die vorgesehene Scheibenbremsvorrichtung gestattet es, das Anliegen der Bremskraft direkt an einer dafür relevanten Stelle zu erfassen. Dadurch wird ein etwaiges Problem im Hinblick auf die Übertragung von Bremskraft auf die Bremsscheibe rechtzeitig erkannt und kann über ein Bremssteuergerät an die Fahrzeugsteuerung und letztlich an den Schienenfahrzeugführer übermittelt werden. Dieser wird somit in die Lage versetzt, durch eine entsprechende Bedienhandlung, beispielsweise Betätigen der Mg-Bremse und/oder Wirbelstrombremse, den Zug sicher anzuhalten.

Ein Ausführungsbeispiel der Erfindung wird nachfolgend unter Bezugnahme auf die Zeichnungen noch näher erläutert. Es zeigen:
- Figur 1: eine Draufsicht (Ansicht von oben) einer Scheibenbremsvorrichtung für ein Schienenfahrzeug,
- Figur 2: eine Vorderansicht (Ansicht von vorn) der Scheibenbremsvorrichtung von Figur 1,
- Figur 3: eine Seitenansicht einer Bremszange der Scheibenbremsvorrichtung von Figur 1,
- Figur 4: eine Schnittansicht eines Bremsbelaghalters der Scheibenbremsvorrichtung von Figur 1 und
- Figur 5: eine Ansicht von Vorn des Bremsbelaghalters von Figur 4.

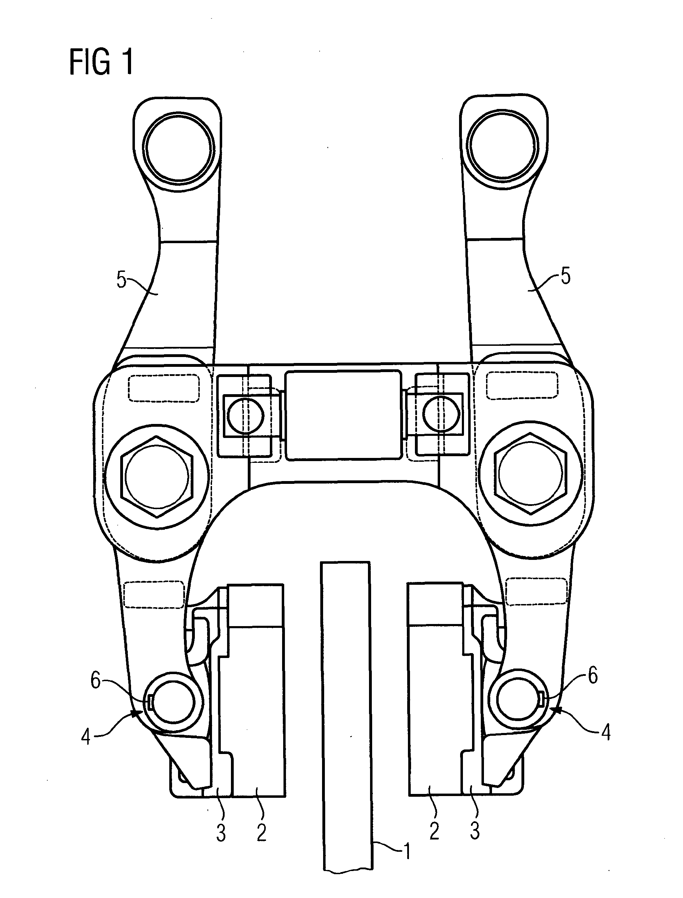

Aus Figur 1 geht der allgemeine Aufbau einer Scheibenbremsvorrichtung für ein Schienenfahrzeug hervor. Eine Bremsscheibe 1 wirkt zusammen mit zwei Bremsbelägen 2, welche wiederum auf Bremsbelaghaltern 3 angeordnet sind. Die Bremsbelaghalter 3 sind jeweils über ein Buchsenlager 4 an dem zugehörigen Ende einer Bremszange 5 angebracht. Wie im Stand der Technik bekannt, ist die Scheibenbremsvorrichtung symmetrisch bezüglich der Bremsscheibe 1 ausgeführt.

Durch geeignete Betätigung der in Figur 1 freien Enden der Bremszangen 5 über einen (hier nicht dargestellten) Bremszylinder werden die Bremsbeläge 2 in Richtung auf die Bremsscheibe 1 bewegt, so dass ein Bremsvorgang vorgenommen werden kann.

Der Kraftweg zum Bewegen der Bremsbelege 2 in Richtung auf die Bremsscheibe 1 führt somit von den freien Enden der Bremszangen 5 über die Buchsengelenke 4, den Bremsbelaghalter 3 zum Bremsbelag 2 selbst.

In das in Figur 1 links dargestellte Buchsenlager 4 ist ein Piezo-Element 6 integriert, und zwar in eine Innenfläche der Buchse gegenüber dem zugehörigen Bremsbelag 2. Sobald der Bremsbelag 2 in Kontakt mit der Bremsscheibe 1 gelangt, wird eine Kraft in das Buchsenlager 4 eingeleitet, welche ein Zusammendrücken des Piezo-Elementes 6 nach sich zieht. Das Piezo-Element 6 erzeugt daraufhin ein elektrisches Signal, welches einer Bremssteuereinheit des Schienenfahrzeugs zugeleitet werden kann. Für die von dem Piezo-Element 6 erfasste Kraft kann ein minimaler Schwellwert festgelegt sein, dessen Überschreiten als Hinweis gewertet wird, dass die Bremse funktioniert.

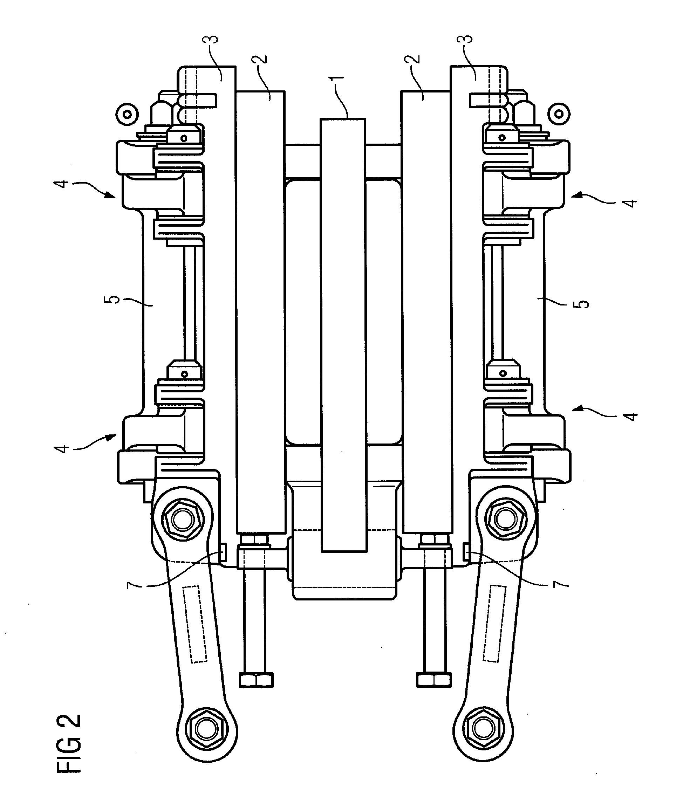

Die Funktion des Piezo-Elementes 6, welches sehr direkt die Beaufschlagung der Bremsscheibe 1 mit Bremskraft erfasst, wird unterstützt durch induktive Näherungsschalter 7, deren Anordnung beispielsweise aus Figur 2 hervorgeht. In Einbaulage der Scheibenbremsvorrichtung befinden sich die induktiven Näherungsschalter 7 im oberen Teil des Bremsbelaghalters 3. Eine Schaltung der Näherungsschalter 7 erfolgt, wenn beispielsweise der Bremsbelag 2 eine vorgegebene Mindestdicke unterschreitet oder fehlt.

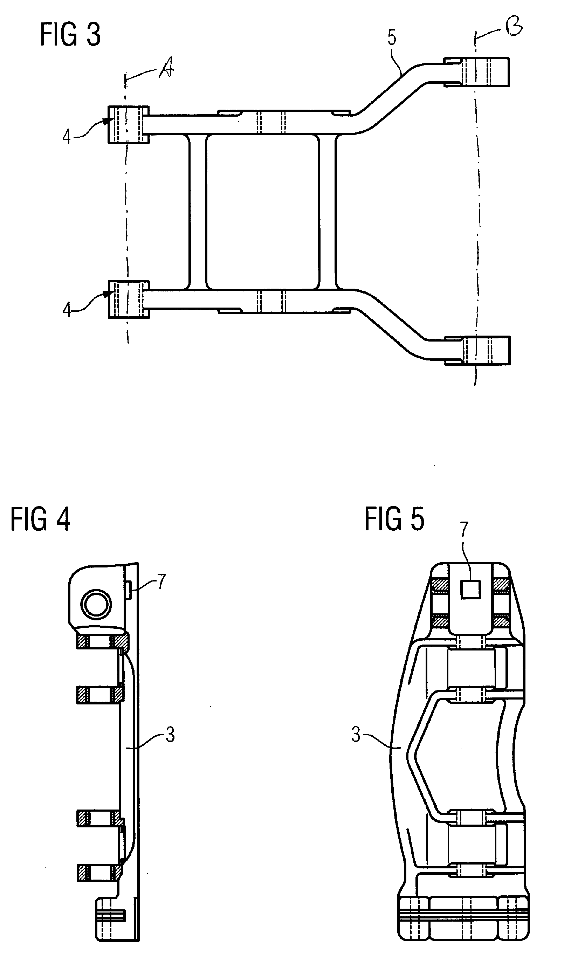

Die genaue Lage des Piezo-Elementes 6 geht noch näher aus Figur 3 hervor, welche ausschließlich eine der Bremszangen 5 zeigt. Das Piezo-Element 6 befindet sich in Höhe einer Lagerachse A für den Bremsbelaghalter 3. Die Bremszange 5 selbst wird beim Bremsvorgang um eine Achse B verschwenkt. Die Figuren 4 und 5 zeigen mehr im Detail die Anordnung der induktiven Näherungsschalter 7, nämlich im oberen Bereich des Bremsbelaghalters 3.

## Patentansprüche

1. Scheibenbremsvorrichtung für Schienenfahrzeuge, mit einer Bremsscheibe (1) zum Anbau an ein Fahrwerk und einer Bremsanordnung zum Bereitstellen von Bremskraft, die einen Bremszylinder und eine Bremszange (5) aufweist, welche einen Bremsbelag (2) zum Zusammenwirken mit der Bremsscheibe (1) trägt, wobei auf einem Kraftübertragungsweg von dem Bremszylinder zum Bremsbelag (2) ein Sensor (6) vorgesehen ist, der zum Erfassen einer Kraftübertragung auf die Bremsscheibe (1) ausgebildet und angeordnet ist,
**dadurch gekennzeichnet, dass**
der Bremsbelag (2) über ein Gelenk (4) an der Bremszange (5) angebracht ist und der Sensor (6) im Bereich des Gelenks (4) angeordnet ist.

2. Scheibenbremsvorrichtung nach Anspruch 1,
**dadurch gekennzeichnet, dass**
das Gelenk (4) als Bolzen-/Buchsen-Kombination ausgebildet ist und der Sensor (6) in die Buchse integriert ist.

3. Scheibenbremsvorrichtung nach einem der Ansprüche 1 oder 2,
**dadurch gekennzeichnet, dass**
der Sensor (6) als Piezo-Element vorliegt.

4. Scheibenbremsvorrichtung nach einem der Ansprüche 1 bis 3,
**dadurch gekennzeichnet, dass**
der Sensor (6) zur Ausgabe eines elektrischen Signals ausgebildet ist, welches ein Erreichen einer vorgegebenen Mindestkraftübertragung zwischen dem Bremsbelag (2) und der Bremsscheibe (1) wiedergibt.

5. Scheibenbremsvorrichtung nach einem der Ansprüche 1 bis 4,
**dadurch gekennzeichnet, dass**
ein induktiver Näherungsschalter (7) zum Erfassen einer Annäherung eines Bremsbelaghalters (3) an die Bremsscheibe (1) vorgesehen ist.

6. Scheibenbremsvorrichtung nach Anspruch 5,
**dadurch gekennzeichnet, dass**
der Näherungsschalter (7) in einen Randbereich des Bremsbelaghalters (3) integriert ist.

7. Scheibenbremsvorrichtung nach einem der Ansprüche 5 oder 6,
**dadurch gekennzeichnet, dass**
die Näherungsschalter (7) zur Signalisierung eines Bremsbelagverlustes und/oder des Erreichens einer Verschleißgrenze für den Bremsbelag (2) ausgelegt sind.

## Claims

1. Disc brake device for rail vehicles, having a brake disc (1) for attachment to a chassis and a brake arrangement for providing braking force, which comprises a brake cylinder and a brake caliper (5), which carries a brake lining (2) to cooperate with the brake disc (1), a sensor (6), which is implemented and arranged to detect a force transmission to the brake disc (1), being provided on a force transmission path from the brake cylinder to the brake lining (2), **characterized in that** the brake lining (2) is attached via a joint (4) to the brake caliper (5) and the sensor (6) is arranged in the area of the joint (4).

2. Disc brake device according to Claim 1,
**characterized in that** the joint (4) is implemented as a pin/bush combination and the sensor (6) is integrated in the bush.

3. Disc brake device according to one of Claims 1 or 2,
**characterized in that** the sensor (6) is provided as a piezoelement.

4. Disc brake device according to one of Claims 1 to 3,
**characterized in that** the sensor (6) is implemented to output an electrical signal, which reflects reaching a predefined minimum force transmission between the brake lining (2) and the brake disc (1).

5. Disc brake device according to one of Claims 1 to 4,
**characterized in that** one inductive proximity switch (7) is provided for detecting an approach of a brake lining holder (3) to the brake disc (1).

6. Disc brake device according to Claim 5,
**characterized in that** the proximity switch (7) is integrated in an edge area of the brake lining holder (3).

7. Disc brake device according to one of Claims 5 or 6,
**characterized in that** the proximity switches (7) are designed for signaling a brake lining loss and/or reaching a wear limit for the brake lining (2).

## Revendications

1. Dispositif de frein à disque pour des véhicules ferroviaires, comprenant un disque ( 1 ) de frein à monter sur un bogie et un dispositif de frein pour la mise à disposition d'une force de freinage, qui a un cylindre de frein et un étrier ( 5 ) de frein qui porte une garniture ( 2 ) de frein destinée à coopérer avec le disque ( 1 ) de frein, dans lequel il est prévu, sur un trajet de transmission de force allant du cylindre de frein à la garniture ( 2 ) de frein, un capteur ( 6 ) qui est constitué et monté pour détecter une transmission de force au disque ( 1 ) de frein,
**caractérisé en ce que**
la garniture ( 2 ) de frein est mise sur l'étrier ( 5 ) de frein par une articulation ( 4 ) et le capteur ( 6 ) est monté dans la zone de l'articulation ( 4 ).

2. Dispositif de frein à disque suivant la revendication 1,
**caractérisé en ce que**
l'articulation ( 4 ) est constituée sous la forme d'une combinaison axe/douille et le capteur ( 6 ) est intégré dans la douille.

3. Dispositif de frein à disque suivant l'une des revendications 1 ou 2,
**caractérisé en ce que**
le capteur ( 6 ) est présent sous la forme d'un élément piézoélectrique.

4. Dispositif de frein à disque suivant l'une des revendications 1 à 3,
**caractérisé en ce que**
le capteur ( 6 ) est constitué pour l'émission d'un signal électrique qui indique qu'une transmission de force minimum prescrite entre la garniture ( 2 ) de frein et le disque ( 1 ) de frein est atteinte.

5. Dispositif de frein à disque suivant l'une des revendications 1 à 4,
**caractérisé en ce**
**qu'**il est prévu un commutateur ( 7 ) inductif de proximité pour détecter qu'un porte-garniture de frein ( 3 ) se rapproche du disque ( 1 ) de frein.

6. Dispositif de frein à disque suivant la revendication 5,
**caractérisé en ce que**
le commutateur ( 7 ) de proximité est intégré dans une partie de bord du porte-garniture de frein ( 3 ).

7. Dispositif de frein à disque suivant l'une des revendications 5 ou 6,
**caractérisé en ce que**
les commutateurs ( 7 ) de proximité sont conçus pour signaler une perte de garniture de frein et/ou qu'une limite d'usure de la garniture ( 2 ) de frein est atteinte.
